# EUROPEAN PATENT SPECIFICATION

(11) **EP 0 916 378 B1**
(45) Date of publication and mention of the grant of the patent: **05.02.2003**
(21) Application number: 98120688.1
(22) Date of filing: 06.11.1998
(51) Int. Cl.: B01D 29/31, F02M 37/22, B01D 29/21, F02M 61/16

(54) **Filter for fuel injectors and for braking systems provided with anti-lock system (ABS)**
Filter für Brennstoffeinspritzung und für Bremssysteme mit Antiblockiersystem (ABS)
Filtre pour des injecteurs de combustible et pour des systèmes de freinage à anti-blocage (ABS)

(30) Priority: 14.11.1997 IT BO970674
(43) Date of publication of application: 19.05.1999
(73) Proprietor: GVS S.r.l., 40069 Zola Predosa (Bologna) (IT)
(72) Inventor: Scagliarini, Marco, 40135 Bologna (IT)
(74) Representative: Modiano, Guido, Dr.-Ing.

(56) References cited:
- DE-A- 3 939 824
- DE-C- 3 718 068
- US-A- 5 335 863

## Description

The present invention relates to a filter for fuel injectors and for braking systems provided with an anti-lock braking system of the ABS type.

In internal-combustion engines requiring the injection of fuel (gasoline or Diesel fuel) it is known to arrange, upstream of the injectors, filters designed to retain the impurities which might obstruct the injection nozzles.

These filters, illustrated by the documents US 5 335 863 A, DE 3 718 068 C and DE 3 939 824 A, are currently composed of an annular element with which a filtering element is associated which is provided by means of a very fine-mesh screen rolled so as to form a cylinder.

Since the consistency of the screen does not ensure sufficient rigidity, an external support is provided which is constituted by a sort of frame which is composed of a plurality of rods which protrude axially from said annular element and support the screen externally and of a ring which connects the ends of said rods and surrounds and retains the end portion of the cylinder formed by the screen. In the practical embodiment of the filter, the annular element, the rods and the ring are formed monolithically by molding plastic material and the screen is retained by embedding it in the plastic material during molding.

It is evident that the structure of conventional filters, even if able to ensure filtration efficiency, nonetheless requires rather complex production steps which significantly affect the cost of the product.

The aim of the present invention is to provide a filter which can ensure the same prerogatives as known ones as regards resistance to filtration stresses but has a constructively simpler structure which is accordingly more advantageous from an economic and qualitative point of view, particularly because a frame for the external support of the filtering screen is no longer required.

According to the present invention, this aim is achieved with a filter for fuel injectors and for braking systems provided with an anti-lock system of the ABS type, characterized in that it comprises an annular element made of plastic material which is provided with internal protrusions whose adjacent sides are spaced so as to form an opening shaped like a radiating pattern, a filtering element being rigidly coupled to said protrusions, said filtering element being constituted by a piece of filtering fabric which is folded so as to have portions which are attached to said sides and form pockets arranged along radial planes.

Further characteristics and advantages of the present invention will become apparent from the following detailed description of a preferred embodiment, illustrated only by way of non-limitative example in the accompanying drawings, wherein:
Figure 1 is a perspective view of the filter;
Figure 2 is an axial view;
Figure 3 is a sectional view, taken along the line III-III of Figure 2; and finally
Figure 4 is an axial sectional view of an embodiment of the filter.

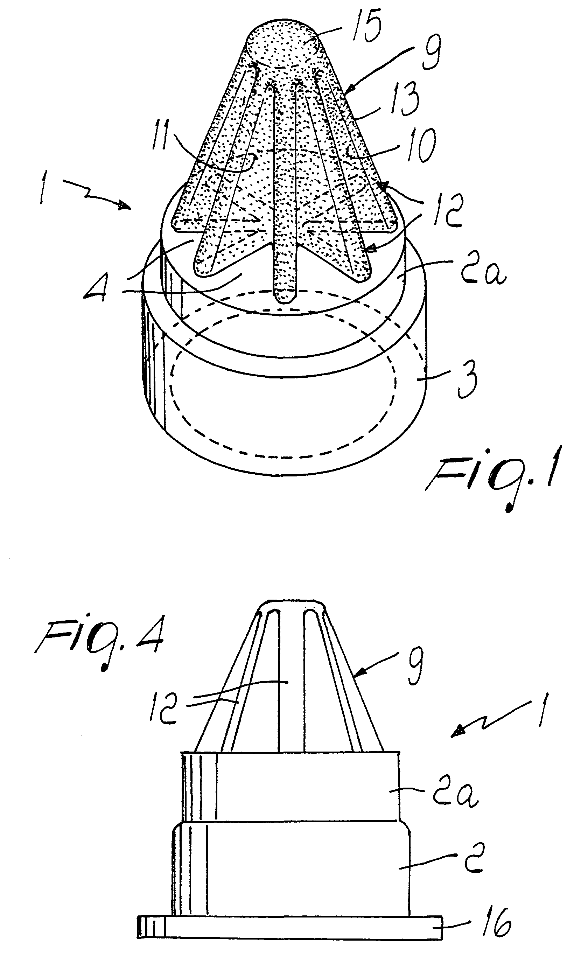

With reference to the above figures, 1 generally designates the filter. Said filter comprises an annular element 2 made of plastic material which has an axis A and is covered by a metal collar 3, the annular edges of which are folded inward so as to grip the annular element 2.

The annular element 2 comprises a tubular portion 2a which protrudes outside the collar 3 and has a plurality of internal protrusions constituted by teeth 4 which, viewed in the direction of the axis A, are shaped like an isosceles triangle whose vertices are spaced from the axis A. The sides 5, 6 of the teeth 4 are mutually parallel, so that inside the annular element 2 there remains an opening which is shaped like a radiating array and comprises radial slots 7 which radiate from a central opening 8.

A piece of filtering fabric 9 is attached to the sides 5 and 6 of the teeth 4. The piece is folded so as to assume a substantially conical shape, in which the portions 10, 11 remain attached to the sides 5 and 6 and form pockets 12 shaped like a right-angled triangle. The outer edges 13 of the pockets 12, which correspond to the hypotenuse of the triangles, converge toward the axis A, while the internal edges 14 are parallel to the axis A and intersect the edges 13 at the apex 15 at a certain distance from the tubular portion 2a.

It is evident that the invention perfectly achieves the intended aim. In particular, it should be noted that the particular pocket fold forms radial ribs which give considerable rigidity to the piece of filtering fabric and avoid the application of supporting frames.

It is also advantageous that the folding of the piece so as to for a radiating array allows to obtain, with minimal axial space occupation, a filtering surface which is large enough to allow the flow of large amounts of fuel through the filter.

Another advantage is the fact that the triangular shape of the teeth allows to obtain, during molding, the embedding of the plastic material in the fabric of the filtering element and therefore a firm anchoring of said filtering element which is capable of withstanding the filtration pressure determined by the resistance that the element inevitably opposes to the flow of the fuel.

The invention is susceptible of numerous modifications and variations, all of which are within the scope of the same inventive concept.

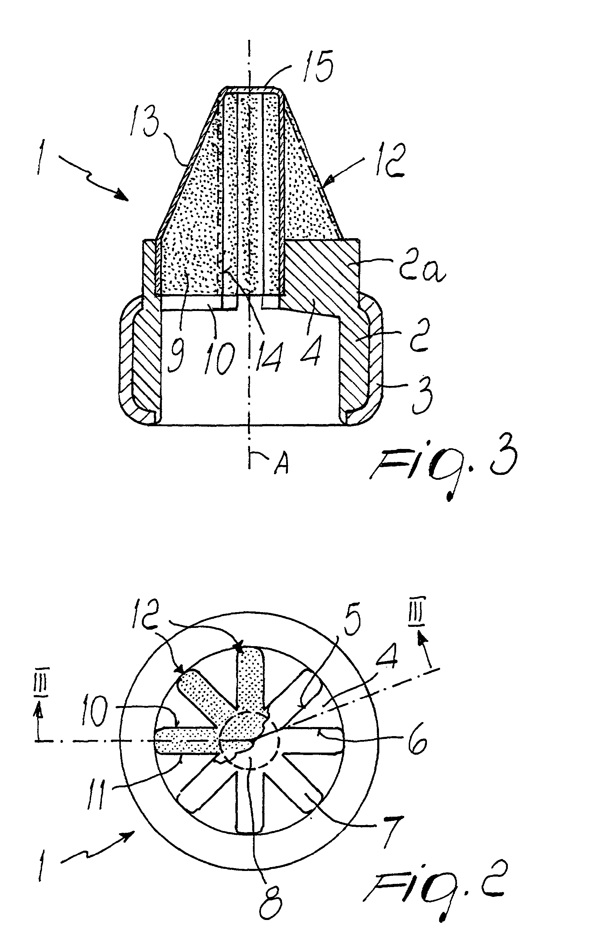

Figure 4 is a view of an embodiment in which the annular element 2 does not have a metal collar and has, on the opposite side with respect to the tubular portion 2a, an external flange 16 for positioning in the fuel duct.

It is also possible to shape the pockets so that their outer edges lie on a cylindrical surface which is concentric to the axis A.

Although the filter is meant in particular to be installed in fuel injectors for gasoline and Diesel-fuel injection engines, it can also be used for other applications, particularly for filtering oil in braking systems provided with anti-lock systems of the ABS type.

In the practical embodiment of the invention, the shapes and the dimensions may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A filter for fuel injectors and for braking systems provided with an anti-lock system of the ABS type, **characterized in that** it comprises an annular element (2) made of plastic material which is provided with internal protrusions (4) whose adjacent sides (5,6) are spaced so as to form an opening shaped like a radiating pattern, a filtering element being rigidly coupled to said protrusions (4), said filtering element being constituted by a piece (9) of filtering fabric which is folded so as to have portions which are attached to said sides and form pockets (12) arranged along radial planes.

2. The filter according to claim 1, **characterized in that** said annular element (2) has a plurality of internal protrusions which are constituted by teeth (4) which are shaped like an isosceles triangle with vertices which are spaced from the axis (A) of said annular element, said teeth (4) having parallel adjacent sides (5, 6) so as to form an opening which is shaped like a radiating array and comprises radial slots (7) which radiate from a central opening (8).

3. The filter according to claim 2, **characterized in that** said piece of filtering fabric (9) is folded so that the portions that remain attached to the sides (5, 6) of said teeth (4) form pockets (12) which are shaped like a right-angled triangle, the outer edges (13) of said pockets (12), which correspond to the hypotenuse of said triangles, converging toward the axis (A) of said annular element (2) so that said filtering element assumes a conical shape.

4. The filter according to claim 2, **characterized in that** said piece (9) of filtering fabric is folded so that the portions (10, 11) that remain attached to the sides (5, 6) of said teeth (4) form pockets the outer edges of which lie on a cylindrical surface which is concentric to the axis (A) of the annular element.

5. The filter according to one of the preceding claims, **characterized in that** said annular element (2) is covered by a metallic collar (3).

6. The filter according to one of claims 1 to 4, **characterized in that** said annular element (2) has, on the opposite side with respect to the filtering element, an external positioning flange (16).

## Patentansprüche

1. Filter für Kraftstoffeinspritzdüsen und für Bremssysteme, die mit einem Antiblockiersystem vom ABS-Typ versehen sind, **dadurch gekennzeichnet, daß** er ein ringförmiges Element (2) umfaßt, das aus Kunststoffmaterial besteht und das mit inneren Vorsprüngen (4) versehen ist, deren benachbarte Seiten (5, 6) so beabstandet sind, daß eine Öffnung ausgebildet wird, die wie ein Strahlungsmuster geformt ist, wobei ein Filterelement starr mit den Vorsprüngen (4) gekoppelt ist, wobei das Filterelement aus einem Stück (9) aus Filtergewebe besteht, das so gefaltet ist, daß es Teile aufweist, die an den Seiten befestigt sind und Taschen (12) bilden, die entlang radialer Ebenen angeordnet sind.

2. Filter nach Anspruch 1, **dadurch gekennzeichnet, daß** das ringförmige Element (2) eine Vielzahl von inneren Vorsprüngen aufweist, die aus Zähnen (4) bestehen, die wie ein gleichschenkliges Dreieck mit Scheitelpunkten geformt sind, die von der Achse (A) des ringförmigen Elements beabstandet sind, wobei die Zähne (4) parallele benachbarte Seiten (5, 6) aufweisen, um eine Öffnung auszubilden, die wie eine Strahlungsanordnung geformt ist und radiale Schlitze (7) umfaßt, die von einer zentralen Öffnung (8) ausgehen.

3. Filter nach Anspruch 2, **dadurch gekennzeichnet, daß** das Stück aus Filtergewebe (9) so gefaltet ist, daß die Teile, die an den Seiten (5, 6) der Zähne (4) befestigt bleiben, Taschen (12) bilden, die wie ein rechtwinkliges Dreieck geformt sind, wobei die Außenkanten (13) der Taschen (12), die der Hypotenuse der Dreiecke entsprechen, in Richtung der Achse (A) des ringförmigen Elements (2) konvergieren, so daß das Filterelement eine konische Form annimmt.

4. Filter nach Anspruch 2, **dadurch gekennzeichnet, daß** das Stück (9) aus Filtergewebe so gefaltet ist, daß die Teile (10, 11), die an den Seiten (5, 6) der Zähne (4) befestigt bleiben, Taschen bilden, deren Außenkanten auf einer zylindrischen Oberfläche liegen, die zur Achse (A) des ringförmigen Elements konzentrisch ist.

5. Filter nach einem der vorangehenden Ansprüche, **dadurch gekennzeichnet, daß** das ringförmige Element (2) mit einem Metallkragen (3) bedeckt ist.

6. Filter nach einem der Ansprüche 1 bis 4, **dadurch gekennzeichnet, daß** das ringförmige Element (2) auf der entgegengesetzten Seite bezüglich des Filterelements einen äußeren Positionierungsflansch (16) aufweist.

## Revendications

1. Filtre pour injecteurs de carburant et pour systèmes de freinage pourvus d'un système anti-blocage du type ABS, **caractérisé en ce qu'**il comprend un élément annulaire (2) constitué de matière plastique qui est pourvu de protubérances internes (4) dont les côtés adjacents (5, 6) sont espacés de façon à former une ouverture en forme de motif rayonnant, un élément de filtrage étant couplé de manière rigide auxdites protubérances (4), ledit élément de filtrage étant constitué d'une pièce (9) de tissu de filtrage qui est pliée de façon à avoir des parties qui sont fixées auxdits côtés et forment des poches (12) disposées le long de plans radiaux.

2. Filtre selon la revendication 1, **caractérisé en ce que** ledit élément annulaire (2) comporte une pluralité de protubérances internes qui sont constituées par des dents (4) qui ont la forme d'un triangle isocèle avec des sommets qui sont espacés de l'axe (A) dudit élément annulaire, lesdites dents (4) ayant des côtés adjacents parallèles (5,6) de façon à former une ouverture ayant le forme d'un agencement rayonnant et comprenant des fentes radiales (7) qui rayonnent depuis une ouverture centrale (8).

3. Filtre selon la revendication 2, **caractérisé en ce que** ladite pièce de tissu de filtrage (4) est pliée de sorte que les parties qui demeurent fixées aux côtés (5, 6) desdites dents (4) forment des poches (12) qui ont la forme d'un triangle rectangle, les bords extérieurs (13) desdites poches (12), qui correspondent à l'hypoténuse desdits triangles, convergeant vers l'axe (A) dudit élément annulaire (2) de sorte que l'élément de filtrage prend une forme conique.

4. Filtre selon la revendication 2, **caractérisé en ce que** ladite pièce (9) de tissu de filtrage est pliée de sorte que les parties (10, 11) qui demeurent fixées aux côtés (5,6) desdites dents (4) forment des poches dont les bords extérieurs se trouvent sur une surface cylindrique qui est concentrique avec l'axe (A) de l'élément annulaire.

5. Filtre selon l'une des revendications précédentes, **caractérisé en ce que** ledit élément annulaire (2) est recouvert d'un collier métallique (3).

6. Filtre selon l'une des revendications 1 à 4, **caractérisé en ce que** ledit élément annulaire (2) comporte, sur le côté opposé par rapport à l'élément de filtrage , une flasque de positionnement externe (16).
